# EUROPÄISCHE PATENTSCHRIFT

(11) **EP 2 433 745 B1**
(45) Veröffentlichungstag und Bekanntmachung des Hinweises auf die Patenterteilung: **22.01.2014**
(21) Anmeldenummer: 10179344.6
(22) Anmeldetag: 24.09.2010
(51) Int. Cl.: B23Q 16/00, B27D 5/00, G01B 5/008, G01B 3/00, B23Q 17/22

(54) **Vorrichtung zum Bearbeiten von Werkstücken**
Device for machining workpieces
Dispositif destiné au traitement de pièces à usiner

(43) Veröffentlichungstag der Anmeldung: 28.03.2012
(73) Patentinhaber: Homag Holzbearbeitungssysteme AG, 72296 Schopfloch (DE)
(72) Erfinder: Dettling, Peter, 72160, Horb (DE)
(74) Vertreter: HOFFMANN EITLE

(56) Entgegenhaltungen:
- EP-A1- 2 181 816
- WO-A1-02/14033
- WO-A2-97/11812
- DE-A1- 3 508 143
- DE-A1- 3 517 165
- US-A- 2 723 598
- US-A- 4 993 896

## Beschreibung

### Technisches Gebiet

Die vorliegende Erfindung bezieht sich auf eine Vorrichtung zum Bearbeiten von Werkstücken, die bevorzugt zumindest abschnittsweise aus Holz, Holzwerkstoffen, Kunststoff oder dergleichen bestehen.

### Stand der Technik

Insbesondere in der Möbelindustrie werden geschwungene Werkstücke mit einer dreidimensionalen Form verarbeitet. Als Formholzteile werden diese dann zum Beispiel für Möbelfronten, Möbelteile sowie für alle möglichen Einsatzzwecke verwendet. Solche räumlich geformten Werkstücke weisen konkave oder aber auch konvexe Werkstückoberflächen auf, die verbreitet mittels Fünfachsbearbeitungsmaschinen bearbeitet werden. Um ansprechende Oberflächen zu erzielen, erfolgt verbreitet zuerst eine Fräsbearbeitung und anschließend eine Beschichtung mittels einer Folie.

Häufig weisen die zu bearbeitenden Werkstücke Fertigungstoleranzen bzw. Maßabweichungen auf, die zum Beispiel bei der Kantenbearbeitung berücksichtigt werden müssen, um die gewünschte Qualität zu erreichen. Verbreitet werden für die Bearbeitung daher Tastaggregate mit Tastrollen oder Tastkurven eingesetzt, die auf der Werkstückoberfläche abrollen oder daran entlang gleiten, um die Istgeometrie des Werkstücks zu erfassen. Eine Bearbeitungseinheit mit einem Bearbeitungswerkzeug oder einem Bearbeitungsaggregat ist dann so mit dem Tastaggregat gekoppelt, dass die Bearbeitungseinheit entsprechend der mittels des Tastaggregats erfassten Istgeometrie des Werkstücks entlang dem Werkstück geführt wird.

Die Tastaggregate des Standes der Technik haben den Nachteil, dass das Tastaggregat für eine fehlerfreie Abtastung des Werkstücks in seiner Orientierung zur Werkstückoberfläche gleich bleiben muss. Daher werden solche Tastaggregate häufig beispielsweise mittels einer zusätzlichen Bearbeitungsachse, beispielsweise einer zusätzlichen C-Achse, immer orthogonal zur Werkstückoberfläche geführt. Das Vorsehen einer solchen zusätzlichen C-Achse ist kostenintensiv und erhöht die Komplexität der Bearbeitungsmaschine, was deren Ausfallwahrscheinlichkeit erhöht.

Ferner offenbart die DE 3 517 165 A1 eine Vorrichtung nach dem Oberbegriff von Anspruch 1.

### Darstellung der Erfindung

Es ist daher Aufgabe der vorliegenden Erfindung eine Vorrichtung zum Bearbeiten von Werkstücken, die bevorzugt zumindest abschnittsweise aus Holz, Holzwerkstoffen, Kunststoff oder dergleichen bestehen, bereitzustellen, die es ermöglicht, eine getastete Bearbeitung von Werkstückoberflächen, insbesondere Werkstückkanten, durchzuführen, die in ihrer Struktur besonders einfach ist und insbesondere keine zusätzliche rotierende C-Achse zum gleichbleibenden Ausrichten des Tastaggregats zur Werkstückoberfläche erfordert.

Erfindungsgemäß wird diese Aufgabe mittels einer Vorrichtung zum Bearbeiten von Werkstücken mit den Merkmalen des Patentanspruchs 1 und ein Verfahren zum Bearbeiten von Werkstücken mit den Merkmalen des Patentanspruchs 9 gelöst. In den Unteransprüchen finden sich vorteilhafte Ausgestaltungen und Verbesserungen der Erfindung.

Eine erfindungsgemäße Vorrichtung zum Bearbeiten von Werkstücken, die bevorzugt zumindest abschnittsweise aus Holz, Holzwerkstoffen, Kunststoff oder dergleichen bestehen, weist eine Bearbeitungseinheit mit mindestens einem Bearbeitungswerkzeug und/oder Bearbeitungsaggregat zum Durchführen der Bearbeitung an einem Werkstück auf. Mit der Bearbeitungseinheit können unterschiedlichste Bearbeitungsfunktionen realisiert sein. Besonders bevorzugt umfasst die Bearbeitungseinheit als Bearbeitungswerkzeug einen Fräser für die Flächen- oder Kantenbearbeitung des Werkstücks. In einem Bearbeitungsaggregat der Bearbeitungseinheit ist besonders bevorzugt ein Kantenanleimaggregat vorgesehen. Erfindungsgemäß ist ferner eine Antriebseinheit zum Herbeiführen einer Relativbewegung zwischen der Bearbeitungseinheit und dem Werkstück vorgesehen. Die Antriebseinheit treibt dabei bevorzugt translatorische oder auch rotatorische Achsen an, die für eine Verlagerung der Bearbeitungseinheit relativ zum Werkstück genutzt werden. Erfindungsgemäß ist eine Tasteinheit zum Tasten einer Werkstückfläche mit der Bearbeitungseinheit verknüpft, um die Bearbeitungseinheit in Bezug auf das jeweilige Werkstück zu positionieren. Die Tasteinheit weist dazu besonders bevorzugt Tastrollen oder Tastelemente zum Abrollen oder Abgleiten auf der Werkstückoberfläche auf. Besonders bevorzugt ist die Tasteinheit fest an der Bearbeitungseinheit angebracht, um die Bearbeitungseinheit positionsgenau entlang der Werkstückfläche zu führen. Es ist jedoch auch im Sinne der vorliegenden Erfindung, dass die Tasteinheit über eine entsprechende Übertragungskinematik mit der Bearbeitungseinheit verknüpft ist, um beispielsweise das Konturfolgeverhalten der Bearbeitungseinheit genau einstellen zu können. Beispielsweise können durch eine in bestimmten Grenzen elastische Anbindung der Tasteinheit an die Bearbeitungseinheit Unebenheiten an der Werkstückoberfläche ausgeglichen werden, was zu einer Reduzierung von Bearbeitungsmarken und damit zu einer gleichmäßigeren Oberfläche führt.

Eine erfindungsgemäße Vorrichtung zum Bearbeiten von Werkstücken weist ferner eine Stelleinheit auf, die eingerichtet ist, die Tastkraft der Tasteinheit zumindest zeitweise in mindestens einer Richtung auf einen vorbestimmten Höchstwert zu begrenzen und/oder über einem vorbestimmten Mindestwert zu halten. Dadurch kann die mit der Tasteinheit verbundene Bearbeitungseinheit definiert entlang einer abgetasteten Oberfläche des zu bearbeitenden Werkstücks geführt werden. Ein Hineinfahren der Bearbeitungseinheit mit dem Bearbeitungswerkzeug oder Bearbeitungsaggregat in das Werkstück bzw. gegen das Werkstück wird durch die Begrenzung der Tastkraft verhindert. Dadurch, dass die Tastkraft bevorzugt über einem vorbestimmten Mindestwert erhalten wird, wird verhindert, dass die Tasteinheit und damit auch die Bearbeitungseinheit sich zu weit von der zu bearbeitenden Werkstückoberfläche entfernt und damit den Kontakt zu der zu bearbeitenden Werkstückoberfläche verliert. Da der Höchstwert für die Tastkraft festgelegt werden kann, kann die Tastkraft innerhalb der im System zur Verfügung stehenden Grenzen beliebig verändert werden. Dadurch ist es möglich, den Werkstoffeigenschaften des zu bearbeitenden Werkstücks gerecht zu werden. So kann zum Beispiel bei einem weichen Werkstoff eine eher niedrige Tastkraft eingestellt werden, während bei harten Werkstoffen auch das Abtasten mit höheren Tastkräften realisierbar ist. Ferner kann die Tastkraft auch an die Geometrie der abtastenden Tasteinheit angepasst werden. Wird zum Beispiel zum Abtasten von feinen Konturen eine Tasteinheit mit einem Tastelement mit geringer Tastfläche, das heißt der Fläche, die auf dem Werkstück abgleitet oder abrollt, gewählt, so kann eine geringe Tastkraft eingestellt werden, um ein Eindrücken der Tasteinheit in das zu bearbeitende Werkstück und damit eine Bearbeitungsungenauigkeit zu verhindern.

Gemäß der vorliegenden Erfindung weist die Stelleinheit mindestens zwei Stellelemente auf, deren Bewegungsachsen sich in mindestens einer Stellung auf einer Drehachse des Tastelements und/oder des Bearbeitungswerkzeugs schneiden. Dadurch, dass sich die Bewegungsachsen in dieser Weise schneiden, wird eine besonders gute Konturtreue der Vorrichtung zum Bearbeiten von Werkstücken erreicht.

Gemäß einer bevorzugten Ausführungsform der vorliegenden Erfindung ist die Tastkraft der Tasteinheit zumindest zeitweise in mindestens zwei Richtungen auf einen vorbestimmten Höchstwert zu begrenzen und bevorzugt über einem vorbestimmten Mindestwert zu halten. Dadurch kann eine Werkstückoberflächenkontur umfahren werden, wobei eine definierte Tastkraft in Richtung auf die Werkstückoberfläche eingestellt werden kann. Bevorzugt sind die beiden Richtungen orthogonal zueinander ausgerichtet. Dadurch kann die Verlagerbarkeit der Tasteinheit in den beiden Richtungen mittels orthogonal zueinander ausgerichteter Linearführungen realisiert werden. Durch Überlagerung der Verlagerung der Tasteinheit in den beiden Richtungen lassen sich somit alle Richtungen in einer Ebene realisieren. Bevorzugt wird die Ebene, die durch die beiden Richtungen aufgespannt wird, so gewählt, dass sie in der Bearbeitungsebene liegt, die beim Umfahren eines dreidimensionalen, zu bearbeitenden Werkstücks durchfahren wird. Damit kann dann eine aus den zwei Tast.kraftrichtungen resultierende Tastkraft immer orthogonal zur zu bearbeitenden Werkstückoberfläche eingestellt werden.

Gemäß einer bevorzugten Ausführungsform ist die Stelleinheit zwischen der Antriebseinheit und der Bearbeitungseinheit angeordnet. Die Stelleinheit stellt dabei die Verbindung zwischen der Antriebseinheit und der Bearbeitungseinheit dar. Die Bearbeitungseinheit kann dadurch mit einer hinsichtlich der Tastkraft durch die Tasteinheit vorbestimmten Tastkraft relativ zum zu bearbeitenden Werkstück bewegt werden.

Gemäß einer bevorzugten Ausführungsform der vorliegenden Erfindung weist die Stelleinheit mindestens ein elektromotorisches Stellelement, besonders bevorzugt einen Linearmotor, auf. Dadurch wird eine besonders feine Einstellbarkeit der Stelleinheit ermöglicht. Ein elektromotorisches Stellelement ermöglicht ferner eine steuerungstechnische Anbindung an die Sensoren des Tastelements. Dadurch können, basierend auf entsprechenden Algorithmen in der Steuerung, die Verhaltenseigenschaften des Stellelements zusammen mit der Tasteinheit definiert werden. Wird als Stellelement ein Linearmotor vorgesehen, so ermöglicht dieser die Erfassung der Stellkraft anhand des Linearmotorstroms, so dass kein separates Kraftmesselement mehr vorgesehen werden braucht. Es ist natürlich ebenso im Sinne der vorliegenden Erfindung, dass das Stellelement hydraulisch oder pneumatisch betätigt wird. Im Vergleich zu hydraulischen oder pneumatischen Stellelementen ermöglicht ein elektromotorisches Stellelement eine höhere Dynamik, das heißt ein schnelleres Reaktionsverhalten.

Gemäß einer bevorzugten Ausführungsform der vorliegenden Erfindung weist die Stelleinheit mindestens zwei Tragelemente auf, zwischen denen jeweils mindestens ein Stellelement angeordnet ist. Die Tragelemente sind dabei zum Beispiel Trägerplatten, die im Wesentlichen parallel zueinander ausgerichtet sind. Das Stellelement ist dann zwischen den Trägerplatten angeordnet und eingerichtet, die Trägerplatten relativ zueinander zu verlagern. Bevorzugt bleiben die Trägerplatten bei ihrer Verlagerung durch das Stellelement parallel zueinander ausgerichtet. Bevorzugt sind die Tragelemente miteinander über Abstandshalter verbunden, wobei mindestens ein Abstandshalter bevorzugt als Führungselement, insbesondere als Linearführungselement ausgebildet ist. Die Verbindung der Tragelemente mittels Linearführungselementen ermöglicht eine besonders hohe Drehsteifigkeit der Tragelemente zueinander. Bevorzugt können die Tragelemente auch mittels Kugeln gegeneinander gelagert werden. Die Lagerung mittels Kugeln ermöglicht eine besonders leichtgängige, leichte und kostengünstige Lagerung.

Gemäß einer bevorzugten Ausführungsform der vorliegenden Erfindung weist die Stelleinrichtung mindestens eine Wegmesseinrichtung in mindestens einer, bevorzugt zwei voneinander abweichenden Richtungen auf, wobei die mindestens eine Wegmesseinrichtung bevorzugt zwischen benachbarten Tragelementen angeordnet ist. Mittels der Wegmesseinrichtung kann die Verlagerung der Tragelemente relativ zueinander erfasst werden. In Verbindung mit der einstellbaren Tastkraft wird dadurch das Verfolgen von Werkstückoberflächenkonturen mittels der Tasteinheit und damit mit dem Bearbeitungswerkzeug oder Bearbeitungsaggregat eine einstellbare Werkstückoberflächenkonturverfolgung ermöglicht.

Gemäß einer besonderen Ausführungsform der vorliegenden Erfindung weist die Vorrichtung ferner eine Steuereinrichtung auf, die eingerichtet ist, die Stelleinrichtung derart zu steuern, dass die Tastkraft der Tasteinheit zumindest zeitweise in mindestens einer Richtung auf einen vorbestimmten Höchstwert begrenzt und/oder über einem vorbestimmten Mindestwert gehalten ist. Die Stelleinrichtung und die Tasteinheit werden somit von einer Steuereinrichtung gesteuert. Die Steuereinrichtung kann dabei Bestandteil einer CNC-Steuerung der Vorrichtung zum Bearbeiten von Werkstücken sein, was eine besonders einfache Integration der Steuerung von Stelleinrichtung und Tasteinheit in die Maschinensteuerung ermöglicht. Es ist jedoch ebenso im Sinne der vorliegenden Erfindung, dass eine dezentrale, ggf. an die Steuerung angebundene, separate Steuerung vorgesehen ist, die die Stelleinrichtung zusammen mit der Tasteinheit steuert.

Ein erfindungsgemäßes Verfahren zum Bearbeiten von Werkstücken, die bevorzugt zumindest abschnittsweise aus Holz, Holzwerkstoffen, Kunststoff oder dergleichen bestehen, weist unter Einsatz einer erfindungsgemäßen Vorrichtung die folgenden Verfahrensschritte auf: Tasten einer Werkstückoberfläche mittels der Tasteinheit, um die Bearbeitungseinheit in Bezug auf das jeweilige Werkstück zu positionieren, Einstellen der Tastkraft der Tasteinheit derart, dass sie zumindest zeitweise in mindestens einer Richtung auf einen vorbestimmten Höchstwert begrenzt und/oder über einem vorbestimmten Mindestwert gehalten ist, und Bearbeiten des Werkstücks mittels der Bearbeitungseinheit. Bevorzugt wird die Tastkraft mittels der Stelleinrichtung ermittelt. Ferner werden bei der Ermittlung der Tastkraft bevorzugt Betriebsparameter der Vorrichtung, wie insbesondere Masse und Beschleunigung der Bauteile, berücksichtigt.

### Kurze Beschreibung der Zeichnungen

Die Erfindung wird im Folgenden anhand von
Ausführungsbeispielen unter Bezugnahme auf die beiliegenden Figuren näher erläutert.

Von den Figuren zeigen:
- Fig. 1: eine schematische Schnittdarstellung einer erfindungsgemäßen Vorrichtung zum Bearbeiten von Werkstücken gemäß einer ersten Ausführungsform;
- Fig. 2: eine schematische Darstellung einer Tasteinheit einer erfindungsgemäßen Vorrichtung zum Bearbeiten von Werkstücken gemäß der Ausführungsform aus Fig. 1; und
- Fig. 3: eine schematische Querschnittsdarstellung der Tasteinheit der Vorrichtung zum Bearbeiten von
- Fig. 4: Werkstücken gemäß dem Ausführungsbeispiel aus Fig. 1; und eine schematische Schnittdarstellung einer erfindungsgemäßen Vorrichtung zum Bearbeiten von Werkstücken gemäß einer zweiten Ausführungsform.

In den Figuren bezeichnen die selben Bezugszeichen gleiche oder funktionsgleiche Komponenten, soweit nichts Gegenteiliges angegeben ist.

### Ausführliche Beschreibung der bevorzugten Ausführungsformen

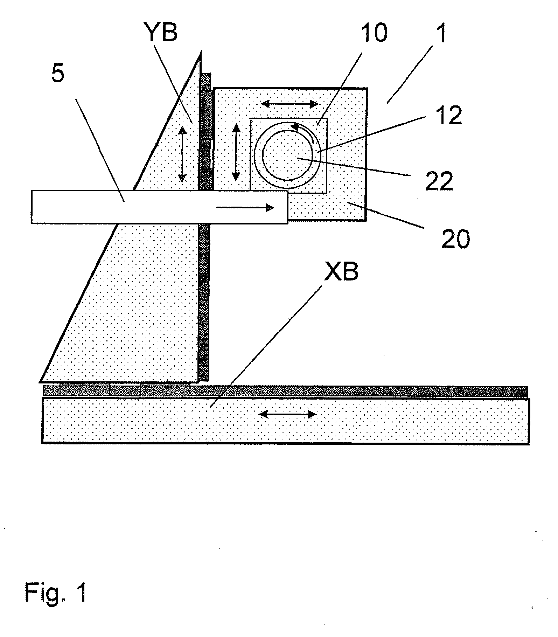

Fig. 1 eine schematische Schnittdarstellung einer erfindungsgemäßen Vorrichtung zum Bearbeiten von Werkstücken gemäß einer ersten Ausführungsform. Die Vorrichtung 1 zum Bearbeiten von Werkstücken 5 gemäß diesem Ausführungsbeispiel weist eine Bearbeitungseinheit 10 auf, die in einer in der Bildebene liegenden und im Wesentlichen horizontal verlaufenden Richtung einer horizontalen Bearbeitungsachse XB und in einer ebenfalls im Wesentlichen in der Bildebene vertikal verlaufenden zweiten Bearbeitungsachsenrichtung YB verfahrbar ist.

Die Bearbeitungseinheit 10 weist bei diesem
Ausführungsbeispiel ein Bearbeitungswerkzeug 12 zum Durchführen der Bearbeitung an dem Werkstück 5 auf. Das Bearbeitungswerkzeug 12 ist hier beispielhaft als Fräswerkzeug ausgeführt. Mit der Bearbeitungseinheit 10 ist eine Tasteinheit 20 verknüpft, die ein Tastelement 22 zum Tasten einer Oberfläche des Werkstücks 5 aufweist, um die Bearbeitungseinheit 10 in Bezug auf das jeweilige Werkstück 5 zu positionieren.

Die Vorrichtung 1 weist ferner eine Stelleinheit 30 auf, die eingereichtet ist, die Tastkraft der Tasteinheit 20 zumindest zeitweise in einer ersten Richtung X und einer zweiten Richtung Y auf einen vorbestimmten Höchstwert zu begrenzen.

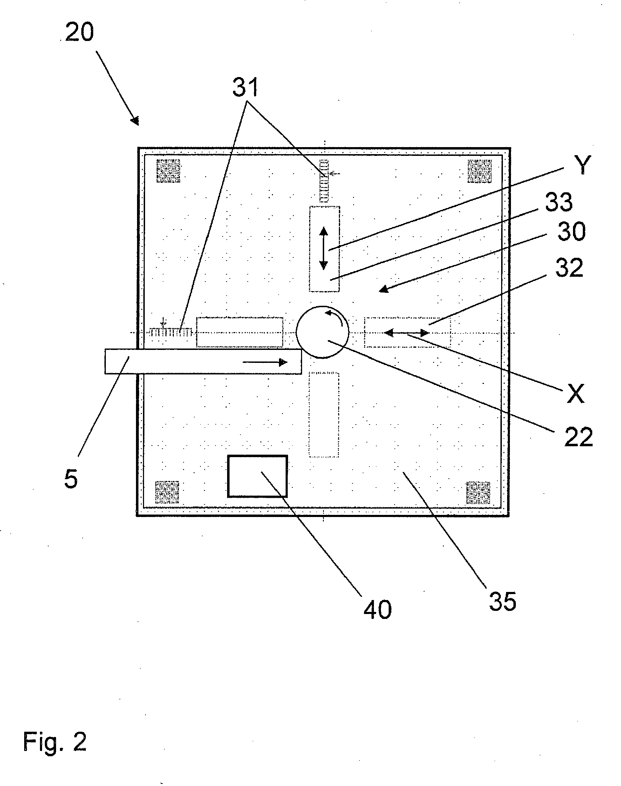

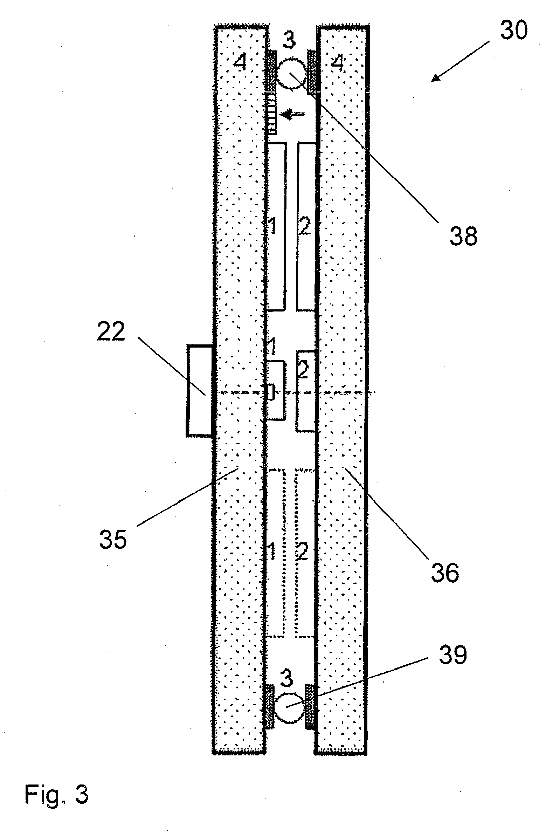

Die Stelleinheit 30 wird im Folgenden anhand der Fig. 2 und Fig. 3 näher erläutert. Die Tasteinheit 20 ermöglicht es in Verbindung mit der Stelleinheit 30, das Bearbeitungswerkzeug 12 entlang eines Werkstücks 5 zu verschieben, wenn das Tastelement 22 über die Oberfläche des Werkstücks 5 abrollt oder abgleitet und gleichzeitig die Stelleinheit 30 die Tastkraft der Tasteinheit 20 in der ersten Richtung X und der zweiten Richtung Y auf einen vorbestimmten Höchstwert begrenzt. Da die Tasteinheit 20 mit der Bearbeitungseinheit 10 verknüpft ist, wird mit dieser Vorrichtung eine Konturverfolgung des Werkstücks 5 ermöglicht. Dabei kann über den vorbestimmbaren Höchstwert der Tastkraft in der Richtung X und Richtung Y der Andruck der Tasteinheit 20 an das Werkstück 5, und damit auch des Bearbeitungswerkzeugs 12 an das Werkstück 5, festgelegt werden.

Die Höchstwerte für die Tastkraft können für die Richtung X und Richtung Y auch unterschiedlich hoch sein. Bei diesem Ausführungsbeispiel ist die Tasteinheit 20 sowohl in der ersten Richtung X unabhängig von der horizontalen Bearbeitungsachse XB als auch in der Richtung Y unabhängig von der Bearbeitungsachse YB beweglich.

Fig. 2 zeigt eine schematische Darstellung einer Tasteinheit 20 einer erfindungsgemäßen Vorrichtung 1 zum Bearbeiten von Werkstücken 5 gemäß der Ausführungsform von Fig. 1. Die Stelleinheit 30 gemäß Fig. 2 ist eingerichtet, die Tastkraft der Tasteinheit 20 in einer ersten Richtung X und einer zweiten Richtung Y auf einen vorbestimmten Höchstwert zu begrenzen. Bei diesem Ausführungsbeispiel sind die Richtung X und die Richtung Y orthogonal zueinander ausgerichtet. Die Tasteinheit 20 weist hier Tragelemente 35, 36 auf, die sich horizontal in der Bildebene erstrecken. In Fig. 2 ist daher nur das Tragelement 35 erkennbar. Das Tragelement 36 ist in Verbindung mit dem Tragelement 35 in Fig. 3 dargestellt. Die Stelleinheit 30 weist ein elektromotorisches Stellelement 32, bei diesem Ausführungsbeispiel einen Linearmotor, auf, der es ermöglicht, die beiden Tragelemente 35, 36 in der ersten Richtung X gegeneinander zu verlagern.

Analog ist ein zweites elektromotorisches Stellelement 33 vorgesehen, das es ermöglicht, die beiden Tragelemente 35, 36 in der zweiten Richtung Y gegeneinander zu verlagern. Das Tastelement 22 ist dabei am Tragelement 35 angebracht und kann somit gegenüber dem Tragelement 36 in der ersten Richtung X und der zweiten Richtung Y verlagert werden. Eine Wegmesseinrichtung 31 ist bei diesem Ausführungsbeispiel zwischen den Tragelementen 35, 36 angeordnet und ermöglicht es, die Verlagerung der beiden Tragelemente 35, 36 gegeneinander in der ersten Richtung X und der zweiten Richtung Y zu messen. Ferner ist eine Steuereinheit 40 vorgesehen, mit der die Stelleinheit 30 gesteuert wird.

Die Steuereinrichtung 40 ermöglicht es, dass die Tastkraft der Tasteinheit 20 bei diesem Ausführungsbeispiel sowohl in der ersten Richtung X als auch in der zweiten Richtung Y auf einen vorbestimmten Höchstwert begrenzt wird. Die Höchstwerte sind dabei bevorzugt einstellbar und können auch unterschiedlich groß sein.

Fig. 3 zeigt die Vorrichtung 1 zum Bearbeiten von Werkstücken 5 gemäß dem Ausführungsbeispiel aus Fig. 1 in einer schematischen Querschnittsdarstellung. Die beiden Tragelemente 35, 36 sind als vertikal verlaufende, parallel zueinander angeordnete Balken mit einem Abstand zueinander dargestellt. Am Tragelement 35 ist dabei das Tastelement 22 angeordnet. Ergänzend zu den Elementen aus Fig. 2 sind in Fig. 3 Abstandshalter 38, 39 der Stelleinheit 30 dargestellt, die eine Beabstandung der beiden Tragelemente 35, 36 voneinander gewährleisten. Die Abstandshalter 38, 39 sind bei dieser Ausführungsform als Kugelelemente ausgebildet. Durch die in Zusammenhang mit Fig. 2 schon beschriebenen elektromotorischen Stellelemente 32, 33, die bei diesem Ausführungsbeispiel als Linearmotore ausgeführt sind, werden die beiden Tragelemente 35, 36 gegeneinander verspannt. Die Abstandshalter 38, 39 haben daher lediglich die Aufgabe, die beiden Tragelemente 35, 36 linear gegeneinander zu führen und müssen ansonsten keine Haltefunktion erfüllen.

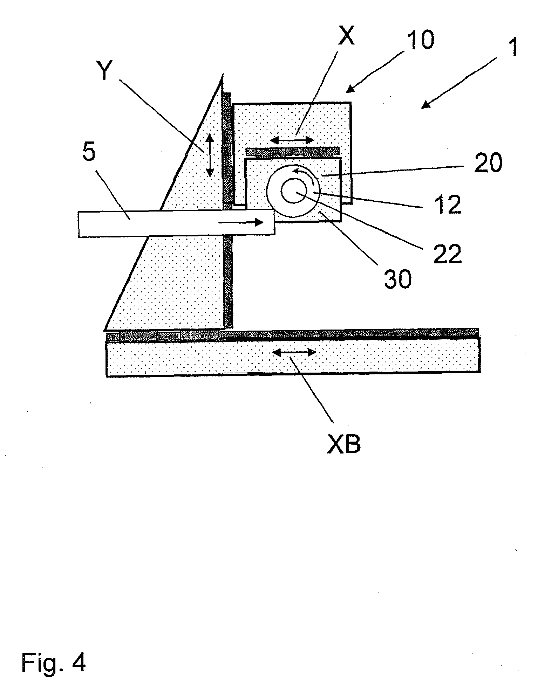

Fig. 4 zeigt eine schematische Schnittdarstellung einer erfindungsgemäßen Vorrichtung 1 zum Bearbeiten von Werkstücken 5 gemäß einer zweiten Ausführungsform. Die Vorrichtung 1 zum Bearbeiten von Werkstücken 5 gemäß diesem Ausführungsbeispiel weist eine Bearbeitungseinheit 10 auf, die in einer in der Zeichenebene liegenden und im Wesentlichen horizontal verlaufenden Richtung einer horizontalen Bearbeitungsachse XB und in einer ebenfalls im Wesentlichen in der Zeichenebene vertikal verlaufenden zweiten Richtung Y verfahrbar ist. Die Bearbeitungseinheit 10 weist bei diesem Ausführungsbeispiel ein Bearbeitungswerkzeug 12 zum Durchführen der Bearbeitung an dem Werkstück 5 auf. Das Bearbeitungswerkzeug 12 ist hier beispielhaft als Fräswerkzeug ausgeführt.

Mit der Bearbeitungseinheit 10 ist eine Tasteinheit 20 verknüpft, die ein Tastelement 22 zum Tasten einer Oberfläche des Werkstücks 5 aufweist, um die Bearbeitungseinheit 10 in Bezug auf das jeweilige Werkstück 5 zu positionieren. Die Vorrichtung 1 weist ferner eine Stelleinheit 30 auf, die eingereichtet ist, die Tastkraft der Tasteinheit 20 zumindest zeitweise in der ersten Richtung X auf einen vorbestimmten Höchstwert zu begrenzen. Die Tasteinheit 20 ermöglicht es in Verbindung mit der Stelleinheit 30, das Bearbeitungswerkzeug 12 entlang eines Werkstücks 5 zu verschieben, wenn das Tastelement 22 über die Oberfläche des Werkstücks 5 abrollt oder abgleitet und gleichzeitig die Stelleinheit 30 die Tastkraft der Tasteinheit 20 in der ersten Richtung X auf einen vorbestimmten Höchstwert begrenzt.

Da die Tasteinheit 20 mit der Bearbeitungseinheit 10 verknüpft ist, wird mit dieser Vorrichtung eine Konturverfolgung des Werkstücks 5 ermöglicht. Dabei kann über den vorbestimmbaren Höchstwert der Tastkraft in der Richtung X der Andruck der Tasteinheit 20 an das Werkstück 5, und damit auch des Bearbeitungswerkzeugs 12 an das Werkstück 5, festgelegt werden. Bei diesem Ausführungsbeispiel ist die Tasteinheit 20 in der ersten Richtung X unabhängig von der horizontalen Bearbeitungsachse XB über ein Linearführungssystem beweglich angeordnet.

Bei der zweiten übernimmt die vertikale Bearbeitungsachse YB neben der Positionierung der Bearbeitungseinheit 10 gleichzeitig die Tastfunktion in vertikaler Richtung. Steuerungstechnisch werden beide Funktionen überlagert. Der Vorteil dieser Lösung besteht darin dass in vertikaler Richtung nur ein Linearmotor notwendig ist. Voraussetzung zur Realisierung dieser Ausführungsform ist das die zu bewegende Masse der Tateinrichtung 20 in einem günstigen Verhältnis zur Tastkraft steht.

Obwohl die vorliegende Erfindung anhand bevorzugter Ausführungsbeispiele vorliegend beschrieben wurde, ist sie darauf nicht beschränkt, sondern auf vielfältige Weise modifizierbar.
- 1: Vorrichtung zum Bearbeiten von Werkstücken
- 5: Werkstück
- 10: Bearbeitungseinheit
- 12: Bearbeitungswerkzeug, Bearbeitungsaggregat
- 16: Antriebseinheit
- 20: Tasteinheit
- 22: Tastelement
- 30: Stelleinheit
- 31: Wegmesseinrichtung
- 32: Stellelement für die erste Richtung
- 33: Stellelement für die zweite Richtung
- 35: Tragelement
- 36: Tragelement
- 38: Abstandshalter
- 39: Abstandshalter
- 40: Steuereinrichtung
- X: erste Tastrichtung
- XB: Richtung der horizontalen Bearbeitungsachse
- YB: Richtung der vertikalen Bearbeitungsachse
- Y: zweite Tastrichtung

## Patentansprüche

1. Vorrichtung (1) zum Bearbeiten von Werkstücken (5), die bevorzugt zumindest abschnittsweise aus Holz, Holzwerkstoffen, Kunststoff oder dergleichen bestehen, mit:
einer Bearbeitungseinheit (10) mit mindestens einem Bearbeitungswerkzeug und/oder Bearbeitungsaggregat (12) zum Durchführen der Bearbeitung an einem Werkstück (5),
einer Antriebseinheit (16) zum Herbeiführen einer Relativbewegung zwischen der Bearbeitungseinheit (10) und dem Werkstück (5), und
einer mit der Bearbeitungseinheit (10) verknüpften Tasteinheit (20) mit einem Tastelement (22)zum Tasten einer Werkstückfläche, um die Bearbeitungseinheit (10) in Bezug auf das jeweilige Werkstück (5) zu positionieren, wobei
die Vorrichtung (1) ferner eine Stelleinheit (30) aufweist, die eingerichtet ist, die Tastkraft der Tasteinheit (20) zumindest zeitweise in mindestens einer ersten Richtung (X) auf einen vorbestimmten Höchstwert zu begrenzen und/oder über einem vorbestimmten Mindestwert zu halten,
**dadurch gekennzeichnet, dass**
die Stelleinheit (30) mindestens zwei Stellelemente (32, 33) aufweist, deren Bewegungsachsen sich in mindestens einer Stellung auf einer Drehachse des Tastelements (22) und/oder des Bearbeitungswerkzeugs (12) schneiden.

2. Vorrichtung nach Anspruch 1, **dadurch gekennzeichnet, dass** die Stelleinheit (30) eingerichtet ist, die Tastkraft der Tasteinheit zumindest zeitweise in mindestens einer ersten Richtung (X) und in einer zweiten Richtung (Y) auf einen vorbestimmten Höchstwert zu begrenzen und/oder über einem vorbestimmten Mindestwert zu halten.

3. Vorrichtung nach Anspruch 2, **dadurch gekennzeichnet, dass** die Stelleinheit (30) zwischen der Antriebseinheit (16) und der Bearbeitungseinheit (10) angeordnet ist.

4. Vorrichtung nach einem der vorhergehenden Ansprüche, **dadurch gekennzeichnet, dass** die Stelleinheit (30) mindestens ein elektromotorisches Stellelement (32), insbesondere mindestens einen Linearmotor, aufweist.

5. Vorrichtung nach einem der vorhergehenden Ansprüche, **dadurch gekennzeichnet, dass** die Stelleinheit (30) mindestens zwei Tragelemente (35, 36) aufweist, zwischen denen jeweils mindestens ein Stellelement (32, 33) angeordnet ist.

6. Vorrichtung nach Anspruch 5, **dadurch gekennzeichnet, dass** die Tragelemente (35, 36) über Abstandhalter (38, 39) miteinander verbunden sind, wobei mindestens ein Abstandhalter (38, 39) bevorzugt als Führungselement, insbesondere Kugel- oder Linearführungselement ausgebildet ist.

7. Vorrichtung nach einem der vorhergehenden Ansprüche, **dadurch gekennzeichnet, dass** die Stelleinheit (30) mindestens eine Wegmesseinrichtung (31) in mindestens einer, bevorzugt zwei voneinander abweichenden Richtungen aufweist, wobei die mindestens eine Wegmesseinrichtung (31) bevorzugt zwischen benachbarten Tragelementen (35, 36) angeordnet ist.

8. Vorrichtung nach einem der vorhergehenden Ansprüche, **dadurch gekennzeichnet, dass** sie ferner eine Steuereinrichtung (40) aufweist, die eingerichtet ist, die Stelleinheit (30) derart zu steuern, dass die Tastkraft der Tasteinheit (20) zumindest zeitweise in mindestens einer Richtung auf einen vorbestimmten Höchstwert begrenzt und/oder über einem vorbestimmten Mindestwert gehalten ist.

9. Verfahren zum Bearbeiten von Werkstücken, die bevorzugt zumindest abschnittsweise aus Holz, Holzwerkstoffen, Kunststoff oder dergleichen bestehen, unter Einsatz einer Vorrichtung (1) nach einem der vorhergehenden Ansprüche, mit den Schritten:
Tasten einer Werkstückoberfläche mittels der Tasteinheit (20), um die Bearbeitungseinheit (10) in Bezug auf das jeweilige Werkstück zu positionieren,
Einstellen der Tastkraft der Tasteinheit (20) derart, dass sie zumindest zeitweise in mindestens einer Richtung auf einen vorbestimmten Höchstwert begrenzt und/oder über einem vorbestimmten Mindestwert gehalten ist, und
Bearbeiten des Werkstücks mittels der Bearbeitungseinheit (1).

10. Verfahren nach Anspruch 9, **dadurch gekennzeichnet, dass** die Tastkraft mittels der Stelleinheit (30) ermittelt wird.

11. Verfahren nach Anspruch 10, **dadurch gekennzeichnet, dass** die Tastkraft unter Berücksichtigung von Betriebsparametern der Vorrichtung (1) wie insbesondere Masse und Beschleunigung der Bauteile ermittelt wird.

## Claims

1. Apparatus (1) for machining workpieces (5) which are preferably at least in sections made of wood, derived timber products, plastic or the like, having:
a machining unit (10) having at least one machining tool and/or machining assembly (12) for carrying out machining on a workpiece (5),
a drive unit (16) for causing a relative movement between the machining unit (10) and the workpiece (5), and
a sensing unit (20) linked to the machining unit (10) and having a sensing element (22) for sensing a workpiece surface in order to position the machining unit (10) in relation to the respective workpiece (5), wherein
the apparatus (1) further has a final control unit (30) which is designed to limit the sensing force of the sensing unit (20) at least temporarily in at least one first direction (X) to a predetermined maximum value and/or keep it above a predetermined minimum value,
**characterised in that**
the final control unit (30) has at least two final control elements (32, 33) of which the axes of movement intersect with each other in at least one position on an axis of rotation of the sensing element (22) and/or the machining tool (12).

2. Apparatus according to claim 1, **characterised in that** the final control unit (30) is designed to limit the sensing force of the sensing unit at least temporarily in at least one first direction (X) and in a second direction (Y) to a predetermined maximum value and/or keep it above a predetermined minimum value.

3. Apparatus according to claim 2, **characterised in that** the final control unit (30) is disposed between the drive unit (16) and the machining unit (10).

4. Apparatus according to any of the preceding claims, **characterised in that** the final control unit (30) has at least one electric motor final control element (32), in particular at least one linear motor.

5. Apparatus according to any of the preceding claims, **characterised in that** the final control unit (30) has at least two supporting elements (35, 36) between which is disposed in each case at least one final control element (32, 33).

6. Apparatus according to claim 5, **characterised in that** the supporting elements (35, 36) are connected to each other by spacers (38, 39), wherein at least one spacer (38, 39) is preferably designed as a guide element, in particular a ball or linear guide element.

7. Apparatus according to any of the preceding claims, **characterised in that** the final control unit (30) has at least one displacement measuring device (31) in at least one, preferably two differing directions, wherein the at least one displacement measuring device (31) is preferably disposed between adjacent supporting elements (35, 36).

8. Apparatus according to any of the preceding claims, **characterised in that** it further has a control device (40) which is designed to control the final control unit (30) in such a way that the sensing force of the sensing unit (20) is at least temporarily limited in at least one direction to a predetermined maximum value and/or kept above a predetermined minimum value.

9. Method for machining workpieces which are preferably at least in sections made of wood, derived timber products, plastic or the like, using an apparatus (1) according to any of the preceding claims, having the steps of:
sensing a workpiece surface by means of the sensing unit (20) in order to position the machining unit (10) in relation to the respective workpiece,
adjusting the sensing force of the sensing unit (20) in such a way that it is at least temporarily limited in at least one direction to a predetermined maximum value and/or kept above a predetermined minimum value, and
machining the workpiece by means of the machining unit (1).

10. Method according to claim 9, **characterised in that** the sensing force is determined by means of the final control unit (30).

11. Method according to claim 10, **characterised in that** the sensing force is determined, while taking into consideration operating parameters of the apparatus (1) such as in particular weight and acceleration of the components.

## Revendications

1. Dispositif (1) pour usiner des pièces (5), qui consistent de préférence au moins par sections, en du bois, du matériau de bois, du plastique ou similaire, comprenant :
une unité d'usinage (10) avec au moins un outil d'usinage et/ou un groupe d'usinage (12) pour effectuer l'usinage sur une pièce (5),
une unité d'entraînement (16) pour provoquer un mouvement relatif entre l'unité d'usinage (10) et la pièce (5), et
une unité de palpage (20) associée à l'unité d'usinage (10) avec un élément de palpage (22) pour palper une surface de pièce, afin de positionner l'unité d'usinage (10) par rapport à la pièce (5) correspondante,
le dispositif (1) présentant en outre une unité de réglage (30), qui est équipée pour, au moins temporairement dans au moins une première direction (X), limiter la force de palpage de l'unité de palpage (20) à une valeur maximale prédéterminée et/ou la maintenir au-dessus d'une valeur minimale prédéterminée,
**caractérisé en ce que**
l'unité de réglage (30) comprend au moins deux éléments de réglage (32, 33) dont les axes de mouvement se coupent dans au moins une position sur un axe de rotation de l'élément de palpage (22) et/ou de l'outil d'usinage (12).

2. Dispositif selon la revendication 1, **caractérisé en ce que** l'unité de réglage (30) est équipée pour, au moins temporairement dans au moins une première direction (X) et une deuxième direction (Y), limiter la force de palpage de l'unité de palpage à une valeur maximale prédéterminée et/ou la maintenir au-dessus d'une valeur minimale prédéterminée.

3. Dispositif selon la revendication 2, **caractérisé en ce que** l'unité de réglage (30) est disposée entre l'unité d'entraînement (16) et l'unité d'usinage (10).

4. Dispositif selon l'une des revendications précédentes, **caractérisé en ce que** l'unité de réglage (30) comprend au moins un élément de réglage électromoteur (32), en particulier au moins un moteur linéaire.

5. Dispositif selon l'une des revendications précédentes, **caractérisé en ce que** l'unité de réglage (30) comprend au moins deux éléments de support (35, 36) entre lesquels respectivement au moins un élément de réglage (32, 33) est disposé.

6. Dispositif selon la revendication 5, **caractérisé en ce que** les éléments de support (35, 36) sont reliés entre eux par des écarteurs (38, 39), au moins un écarteur (38, 39) étant formé de préférence en tant qu'élément de guidage, en particulier, élément de guidage sphérique ou linéaire.

7. Dispositif selon l'une des revendications précédentes, **caractérisé en ce que** l'unité de réglage (30) comprend au moins un dispositif de mesure de déplacement (31) dans au moins une, de préférence deux directions s'écartant l'une de l'autre, l'au moins un dispositif de mesure de déplacement (31) étant disposé de préférence entre des éléments de support (35, 36) voisins.

8. Dispositif selon l'une des revendications précédentes, **caractérisé en ce qu'**il comprend en outre un dispositif de commande (40), qui est équipé pour commander l'unité de réglage (30) de telle sorte que la force de palpage de l'unité de palpage (20) est, au moins temporairement dans au moins une direction, limitée à une valeur maximale prédéterminée et/ou maintenue au-dessus d'une valeur minimale prédéterminée.

9. Procédé pour usiner des pièces, qui consistent de préférence au moins par sections, en du bois, du matériau de bois, du plastique ou similaire, en utilisant un dispositif (1) selon l'une des revendications précédentes, comprenant les étapes consistant à :
palper une surface de pièce au moyen de l'unité de palpage (20), pour positionner l'unité d'usinage (10) par rapport à la pièce respective,
régler la force de palpage de l'unité de palpage (20) de façon telle qu'elle soit, au moins temporairement dans au moins une direction, limitée à une valeur maximale prédéterminée et/ou maintenue à une valeur minimale prédéterminée, et
usiner la pièce au moyen de l'unité d'usinage (10).

10. Procédé selon la revendication 9, **caractérisé en ce que** la force de palpage est déterminée au moyen de l'unité de réglage (30).

11. Procédé selon la revendication 10, **caractérisé en ce que** la force de palpage est déterminée en tenant compte de paramètres de fonctionnement du dispositif (1) comme en particulier la masse et l'accélération des composants.
